# EUROPEAN PATENT APPLICATION

(11) **EP 4 317 355 A1**
(43) Date of publication of application: **07.02.2024**
(21) Application number: 21934608.7
(22) Date of filing: 26.11.2021
(51) Int. Cl.: C09K 5/06, C09K 5/14, C04B 35/52

(54) **HEAT STORAGE GRAPHITE HAVING LOW DEGREE OF ORIENTATION, COMPOSITION FOR PREPARING HEAT STORAGE GRAPHITE HAVING LOW DEGREE OF ORIENTATION, AND METHOD THEREFOR**

(30) Priority: 31.03.2021 CN 202110355151
(71) Applicant: China Energy Investment Corporation Limited, Beijing 100011 (CN); National Institute of Clean-and-Low-Carbon Energy, Beijing 102209 (CN)
(72) Inventor: DUAN, Chunting, Beijing 102209 (CN); WEI, Chang, Beijing 102209 (CN); LIANG, Wenbin, Beijing 102209 (CN); LIU, Junqing, Beijing 102209 (CN); ZHENG, Dongfang, Beijing 102209 (CN); GAO, Guanghui, Beijing 102209 (CN); SHENG, Ying, Beijing 102209 (CN); WEN, Chengyu, Beijing 102209 (CN)
(74) Representative: Ström & Gulliksson AB
(86) International application number: PCT/CN2021/133577
(87) International publication number: WO 2022/205972

(57) **Abstract**

Provided a heat storage graphite having a low degree of orientation, a composition for preparing heat storage graphite having a low degree of orientation, and a method for preparing heat storage graphite having a low degree of orientation. The heat storage graphite comprises, in terms of the total mass of the heat storage graphite, 65-85wt% of dispersed-phase graphite and 15-35wt% of continuous-phase graphite, wherein the dispersed-phase graphite is spherical graphite, and the sphericity of the spherical graphite is 0.5-1; the ratio of the vertical thermal conductivity/plane-oriented thermal conductivity of the heat storage graphite is 0.4-0.8; and the plane-oriented thermal conductivity of the heat storage graphite is 50-150 W/mK. The heat storage graphite has the advantages of a low degree of orientation and high plane-oriented thermal conductivity.

## Description

### Cross-reference to related application

The present application claims the rights and interests of the Chinese patent application 202110355151.9 submitted on March 31, 2021 with the title of "heat storage graphite having low degree of orientation, composition for preparing heat storage graphite having low degree of orientation, and method therefor", the content of this application is incorporated herein by reference.

### Technical Field

The present invention relates to the technical field of heat storage materials, in particular to a heat storage graphite having a low degree of orientation, a composition for preparing the heat storage graphite having a low degree of orientation, and a preparation method for the heat storage graphite having a low degree of orientation.

### Background

Existing heat storage carbon materials are generally made by sintering binders (such as pitch) and fillers (such as natural graphite) after molding. Since natural graphite itself has an oriented structure, after compression process, the orientation of natural graphite increases, and the obtained bulk material often has strong anisotropy, resulting in high thermal conductivity. However, high orientation will also cause a large difference between the vertical thermal conductivity and the plane-oriented thermal conductivity, and the ratio of the two is generally less than 0.2. Larger anisotropy is not conducive to the temperature transfer and temperature uniformity of the heat storage and heat release process.

Therefore, it is urgent to provide a heat storage carbon material having a low degree of orientation and a high thermal conductivity.

### Summary

The purpose of the present invention is to overcome the problem of strong anisotropy of heat storage carbon materials in the prior art, and provide a heat storage graphite having a low degree of orientation, a composition for preparing the heat storage graphite and a preparation method thereof. The heat storage graphite has the advantages of low degree of orientation, high thermal conductivity and high compressive strength.

In order to achieve the above purpose, the first aspect of the present invention provides a heat storage graphite having a low degree of orientation, the heat storage graphite comprises, based on the total mass of the heat storage graphite, 65-85wt% dispersed-phase graphite and 15-35wt% continuous-phase graphite; wherein the dispersed-phase graphite is spherical graphite, and the sphericity of the spherical graphite is 0.5-1; the ratio of vertical thermal conductivity/plane-oriented thermal conductivity of the heat storage graphite is 0.4-0.8, and the plane-oriented thermal conductivity of the heat storage graphite is 50-150 W/mK.

The second aspect of the present invention provides a composition for preparing a heat storage graphite having a low degree of orientation, the composition comprises 60-80 parts by weight of spherical graphite and 20-40 parts by weight of pitch, wherein the sphericity of the spherical graphite is 0.5-1.

The third aspect of the present invention provides a method for preparing a heat storage graphite having a low degree of orientation, the method includes the following steps:
(1) performing thermo-compression molding on a composition comprising spherical graphite and pitch to obtain a molding material;
(2) performing an carbonization treatment and then an graphitization treatment on the molding material to obtain the heat storage graphite.

Through the above technical scheme, the beneficial technical effects obtained by the present invention are as follows:
1) The heat storage graphite having a low degree of orientation provided by the present invention has high thermal conductivity, high compressive strength and low degree of orientation, the ratio of vertical thermal conductivity/plane-oriented thermal conductivity is higher than 0.4, and the temperature transfer in the heat storage and heat release process is stable;
2) The preparation method of the heat storage graphite having a low degree of orientation prepared by the present invention is simple to operate and suitable for industrial promotion.

### Detailed description

Neither the endpoints of the ranges nor any values disclosed herein are limited to such precise ranges or values, and these ranges or values are understood to include values close to these ranges or values. For value ranges, between the endpoints of the ranges, between the endpoints of the ranges and individual point values, and between individual point values can be combined with each other to obtain one or more new value ranges, these value ranges should be considered as specifically disclosed herein.

The first aspect of the present invention provides a heat storage graphite having a low degree of orientation, the heat storage graphite comprises, based on the total mass of the heat storage graphite, 65-85wt% dispersed-phase graphite and 15-35wt% continuous-phase graphite; wherein the dispersed-phase graphite is spherical graphite, and the sphericity of the spherical graphite is 0.5-1; the ratio of vertical thermal conductivity/plane-oriented thermal conductivity of the heat storage graphite is 0.4-0.8, and the plane-oriented thermal conductivity of the heat storage graphite is 50-150 W/mK.

Through research, the inventors of the present invention have found that the spherical graphite with a sphericity of 0.5-1 is uniformly dispersed in the continuous-phase graphite, which can reduce the degree of orientation of the heat storage graphite and increase the ratio of vertical thermal conductivity/plane-oriented thermal conductivity(λ⊥//), thus making the temperature transfer of heat storage materials more stable during the heat storage and heat release process.

In a preferred embodiment, based on the total mass of the heat storage graphite, the heat storage graphite includes 75-85 wt% dispersed-phase graphite and 15-25 wt% continuous-phase graphite.

In a preferred embodiment, the sphericity of the spherical graphite is 0.8-1.

In a preferred embodiment, the ratio of vertical thermal conductivity/plane-oriented thermal conductivity of the heat storage graphite is 0.6-0.8.

In a preferred embodiment, the plane-oriented thermal conductivity of the heat storage graphite is 80-120W/mK.

In a preferred embodiment, the density of the heat storage graphite is 1.6-2.1g/cm³, preferably 1.8-2.1g/cm³; the compressive strength of the heat storage graphite is 10-50MPa, preferably 20-40MPa.

The second aspect of the present invention provides a composition for preparing a heat storage graphite having a low degree of orientation, the composition comprises 60-80 parts by weight of spherical graphite and 20-40 parts by weight of pitch, wherein the sphericity of the spherical graphite is 0.5-1.

In a preferred embodiment, the composition comprises 70-80 parts by weight of spherical graphite and 20-30 parts by weight of pitch, wherein the sphericity of the spherical graphite is 0.8-1.

In a preferred embodiment, the average particle size of the spherical graphite is 25-2000µm.

In a further preferred embodiment, the spherical graphite is at least two kinds of spherical graphite selected from spherical graphite with an average particle size of 10-25µm, spherical graphite with an average particle size of 25-50µm, spherical graphite with an average particle size of 50-100µm, spherical graphite with an average particle size of 100-300µm, spherical graphite with an average particle size of 300-600µm, and spherical graphite with an average particle size of 600-1000µm.

In the present invention, 25-50µm, 50-100µm, 100-300µm, and 300-600µm refer to the range including the minimum value but not including the maximum value, 600-1000µm refers to the range including the minimum value and the maximum value.

In a more preferred embodiment, the spherical graphite is at least three kinds of spherical graphite selected from spherical graphite with an average particle size of 10-25µm, spherical graphite with an average particle size of 25-50µm, spherical graphite with an average particle size of 50-100µm, spherical graphite with an average particle size of 100-300µm, spherical graphite with an average particle size of 300-600µm, and spherical graphite with an average particle size of 600-1000µm.

In a further more preferred embodiment, the spherical graphite is at least three kinds of spherical graphite selected from spherical graphite with an average particle size of 10-25µm, spherical graphite with an average particle size of 25-50µm, spherical graphite with an average particle size of 50-100µm, spherical graphite with an average particle size of 100-300µm, spherical graphite with an average particle size of 300-600µm, and spherical graphite with an average particle size of 600-1000µm, wherein the mass ratio of spherical graphite with small-range particle size, medium-range particle size and large-range particle size is 1:0.1-15:0.1-30, preferably 1:0.5-10:1-15, more preferably 1: 1-4:2-8. Wherein, the small-range particle size, medium-range particle size and large-range particle size are distinguished according to the numerical values of the particle size ranges of the three kinds of spherical graphite. Preferably, the spherical graphite with small-range particle size is selected from spherical graphite with an average particle size of 10-25µm and/or spherical graphite with an average particle size of 25-50µm; the spherical graphite with medium-range particle size is selected from spherical graphite with an average particle size of 50-100µm and/or spherical graphite with an average particle size of 100-300µm; the spherical graphite with large-range particle size is selected from spherical graphite with an average particle size of 300-600µm and/or spherical graphite with an average particle size of 600-1000µm.

In a preferred embodiment, the carbon content of the spherical graphite is ≥95wt%, preferably ≥97wt%, and the graphitization degree of the spherical graphite is ≥85%, preferably ≥90%.

In the present invention, the spherical graphite can be obtained commercially. For example, the spherical graphite has a sphericity of 0.9, a carbon content of 99.5%, a graphitization degree of 99%, and an average particle size of 25-50µm, 100-300µm, 600-1000µm and other parameters. When its sphericity does not meet the use requirements, the materials can be screened by ball milling and screening.

In a preferred embodiment, the pitch is non-mesophase pitch or mesophase pitch. Wherein, the mesophase content of the non-mesophase pitch is 0, the softening point of the non-mesophase pitch is 130-250°C, preferably 140-200°C, and the carbon residue rate of the non-mesophase pitch is ≥60wt%, preferably ≥65wt%. The mesophase content of the mesophase pitch is 50-100wt%, preferably 75-100wt%; the H/C molar ratio of the mesophase pitch is 0.5-0.7, preferably 0.55-0.65; the softening point of the mesophase pitch is 200-350°C, preferably 230-325°C; the carbon residue rate of the mesophase pitch is ≥ 70wt%, preferably ≥ 75wt%.

In the present invention, the non-mesophase pitch and the mesophase pitch can be obtained commercially. For example, the non-mesophase pitch has a mesophase content of 0, a softening point of 165°C, and a carbon residue rate of 65wt% and other parameters; the mesophase pitch has a mesophase content of 100wt%, an H/C molar ratio of 0.64, a softening point of 285°C, a carbon residue rate of 75wt% and other parameters.

The third aspect of the present invention provides a method for preparing a heat storage graphite, the method includes the following steps:
(1) performing thermo-compression molding on a composition comprising spherical graphite and pitch to obtain a molding material;
(2) performing an carbonization treatment and then an graphitization treatment on the molding material to obtain the heat storage graphite.

In a preferred embodiment, the conditions of the thermo-compression molding comprise a molding temperature of 250-600°C, preferably 300-550°C, a molding pressure of 10-100MPa, preferably 20-80MPa, and a molding time of 1-5h, preferably 1.5-2h.

In a preferred embodiment, the conditions of the carbonization treatment comprise a carbonization temperature of 800-1600°C, preferably 1200-1600°C, and a carbonization time of 0.5-3h, preferably 0.5-1h.

In a preferred embodiment, the graphitization treatment is performed at 2700-3200°C for 0.5-2h; further preferably, the graphitization treatment is performed at 2800-3200°C for 0.5-1h.

In a preferred embodiment, the carbonization treatment and graphitization treatment are performed under the protection of an inert gas, wherein the inert gas can be nitrogen and/or argon.

Hereinafter, the present invention will be described in detail through examples. Wherein, the sphericity of spherical graphite is measured by BT-2800 dynamic image particle size and particle shape analysis system. The vertical thermal conductivity and plane-oriented thermal conductivity in the examples and comparative examples are tested according to ASTME1461, the vertical thermal conductivity refers to the lowest thermal conductivity in the three directions of x, y, and z, and the plane-oriented thermal conductivity refers to the highest thermal conductivity in the three directions of x, y, and z; the porosity is tested by mercury porosimetry, the compressive strength is tested according to GBT1431-2019, and the bulk density is tested according to GB/T24528-2009. The content of the dispersed-phase (spherical graphite) in the heat storage graphite is calculated by the formula: the content of the dispersed-phase (spherical graphite) in the heat storage graphite = the mass of spherical graphite in the raw material / (the mass of spherical graphite in the raw material + the mass of pitch * the carbon residue rate of pitch).

In the following examples and comparative examples, the spherical graphite, mesophase pitch, and non-mesophase pitch are all commercially available products, and the parameters of the products meet the parameters in the examples and comparative examples.

### Example 1

(1) A composition of 70g spherical graphite (with a sphericity of 0.9, a carbon content of 99.5%, and a graphitization degree of 99%, wherein the spherical graphite with an average particle size of 25-50µm is 10g, and the spherical graphite with an average particle size of 100-300µm is 15g, the spherical graphite with an average particle size of 600-1000µm is 45g) and 30g mesophase pitch (with a mesophase content of 100wt%, a H/C molar ratio of 0.64, a softening point of 285°C, and a residual carbon rate of 75wt%) was uniformly mixed, and then molded to obtain a molding material by compression molding, wherein the molding temperature was 550°C, the molding pressure was 80MPa, and the molding time was 2h.
(2) Under the protection of nitrogen, the above molding material was first carbonized at 1500°C for 1 hour, and then graphitized at 3000°C for 0.5 hour to obtain a heat storage graphite.

### Example 2

Similar to Example 1, the difference is that the mesophase pitch in Example 1 is replaced by non-mesophase pitch (with a mesophase content of 0, a softening point of 165°C, and a carbon residue rate of 65wt%).

### Example 3

Similar to Example 1, the difference is that the sphericity of the spherical graphite is 0.6.

### Example 4

Similar to Example 1, the difference is that the molding pressure is 25 MPa.

### Example 5

Similar to Example 1, the difference is that the addition amount of spherical graphite is 60g, the addition amount of mesophase pitch (with a mesophase content of 50wt%, a H/C molar ratio of 0.6, a softening point of 245°C, and a residual carbon rate of 70wt%) is 40g; the molding temperature is 400°C, the pressure is 50MPa, and the graphitization temperature is 2800°C.

### Example 6

Similar to Example 1, the difference is that the addition amount of spherical graphite (with a sphericity of 0.9, a carbon content of 99.5%, and a graphitization degree of 99%, wherein the spherical graphite with an average particle size of 10-25µm is 20g, and the spherical graphite with an average particle size of 25-50µm is 25g, the spherical graphite with an average particle size of 50-100µm is 25g) is 75g and the addition amount of mesophase pitch is 25g.

### Comparative example 1

Similar to Example 1, the difference is that the spherical graphite in Example 1 is replaced by natural flake graphite (with an average particle size of 500µm, a carbon content of 99.5%, and a graphitization degree of 99%).

### Comparative example 2

Similar to Example 1, the difference is that the spherical graphite in Example 1 is replaced by the spherical graphite with a sphericity of 0.3, a carbon content of 99.5%, a graphitization degree of 99%, and an average particle size of 600-1000µm.

### Comparative example 3

Similar to Example 1, the difference is that the addition amount of spherical graphite is 90g, and the addition amount of mesophase pitch is 10g.

### Test example 1

The heat storage materials prepared in Examples 1-6 and Comparative Examples 1-3 were tested for vertical thermal conductivity, plane-oriented thermal conductivity, compressive strength and density, the test results are shown in Table 1:

**Table 1**

| Number | Content of dispersed -phase graphite wt% | Content of continuou s-phase graphite wt% | Plane-oriented thermal conductivity W/mK | λ⊥/λ// | Densi ty g/cm³ | Compres sive strength MPa |
|---|---|---|---|---|---|---|
| Example 1 | 75 | 25 | 120 | 0.6 | 2.1 | 35 |
| Example 2 | 78 | 22 | 90 | 0.6 | 2.0 | 30 |
| Example 3 | 75 | 25 | 145 | 0.4 | 2.1 | 40 |
| Example 4 | 75 | 25 | 85 | 0.8 | 1.8 | 20 |
| Example 5 | 65 | 35 | 60 | 0.7 | 1.9 | 25 |
| Example 6 | 80 | 20 | 55 | 0.8 | 1.7 | 15 |
| Comparative example 1 | 75 | 25 | 600 | 0.05 | 2.1 | 40 |
| Comparative example 2 | 75 | 25 | 400 | 0.09 | 2.1 | 40 |
| Comparative example 3 | 92 | 8 | 25 | 0.7 | 1.6 | 7 |

It can be seen from the results of Examples 1-6 in Table 1 that the heat storage graphite prepared by the present invention has the advantages of low degree of orientation, high thermal conductivity and high compressive strength. By comparing Example 1 and Comparative Example 1, Comparative Example 2, it can be seen that when the sphericity of flake graphite or spherical graphite is relatively small, the obtained heat storage graphite has large plane-oriented thermal conductivity, but high degree of orientation and low vertical thermal conductivity, which is not conducive to the temperature transfer and temperature uniformity during the heat storage and heat release process.

By comparing Example 1 and Comparative Example 3, it can be seen that when the amount of pitch is too small, effective bonding cannot be achieved, and the obtained heat storage graphite has poor compressive strength and low thermal conductivity.

The preferred embodiments of the present invention have been described in detail above, however, the present invention is not limited thereto. Within the scope of the technical concept of the present invention, a variety of simple modifications can be made to the technical solution of the present invention, including the combination of various technical features in any other suitable manner, these simple modifications and combinations should also be regarded as the content disclosed by the present invention, and all belong to the protection scope of the present invention.

## Claims

1. A heat storage graphite having a low degree of orientation, **characterized in that**: the heat storage graphite comprises, based on the total mass of the heat storage graphite, 65-85wt% dispersed-phase graphite and 15-35wt% continuous-phase graphite; wherein the dispersed-phase graphite is spherical graphite, and the sphericity of the spherical graphite is 0.5-1, the ratio of vertical thermal conductivity/plane-oriented thermal conductivity of the heat storage graphite is 0.4-0.8, and the plane-oriented thermal conductivity of the heat storage graphite is 50-150 W/mK.

2. The heat storage graphite according to claim 1, wherein the density of the heat storage graphite is 1.6-2.1g/cm³, preferably 1.8-2.1g/cm³; and the compressive strength of the heat storage graphite is 10-50MPa, preferably 20-40MPa.

3. A composition for preparing heat storage graphite having a low degree of orientation, **characterized in that** the composition comprises 60-80 parts by weight of spherical graphite and 20-40 parts by weight of pitch, wherein the sphericity of the spherical graphite is 0.5-1.

4. The composition according to claim 3, wherein the average particle size of the spherical graphite is 10-2000µm;
preferably, the spherical graphite is at least two kinds of spherical graphite selected from spherical graphite with an average particle size of 10-25µm, spherical graphite with an average particle size of 25-50µm, spherical graphite with an average particle size of 50-100µm, spherical graphite with an average particle size of 100-300µm, spherical graphite with an average particle size of 300-600µm and spherical graphite with an average particle size of 600-1000µm;
preferably, the carbon content of the spherical graphite is ≥95wt%, preferably ≥97wt%, and the graphitization degree of the spherical graphite is ≥85%, preferably ≥90%.

5. The composition according to claim 3 or 4, wherein the pitch is non-mesophase pitch or mesophase pitch;
preferably, the non-mesophase pitch has a mesophase content of 0, a softening point of 130-250°C, preferably 140-200°C, and a carbon residue rate of ≥60wt%, preferably ≥65wt%;
preferably, the mesophase pitch has a mesophase content of 50-100wt%, preferably 75-100wt%, an H/C molar ratio of 0.5-0.7, preferably 0.55-0.65, a softening point of 200-350°C, preferably 230-325°C, and a carbon residue rate of ≥ 70wt%, preferably ≥ 75wt%.

6. A method for preparing a heat storage graphite, **characterized in that**: the method comprises the following steps:
(1) performing thermo-compression molding on a composition comprising spherical graphite and pitch to obtain a molding material;
(2) performing an carbonization treatment and then an graphitization treatment on the molding material to obtain the heat storage graphite.

7. The preparation method according to claim 6, wherein the conditions of the thermo-compression molding comprise a molding temperature of 250-600°C, preferably 300-550°C, a molding pressure of 10-100MPa, preferably 20-80MPa, and a molding time of 1-5h, preferably 1.5-2h.

8. The preparation method according to claim 6 or 7, wherein the conditions of the carbonization treatment comprise a carbonization temperature of 800-1600°C, preferably 1200-1600°C, and a carbonization time of 0.5-3h, preferably 0.5-1h.

9. The preparation method according to any one of claims 6-8, wherein the graphitization treatment is performed at 2700-3200°C for 0.5-2h; further preferably, the graphitization treatment is performed at 2800-3200°C for 0.5-1h.

10. The preparation method according to any one of claims 6-9, wherein the carbonization treatment and graphitization treatment are performed under the protection of an inert gas.
